Europäisches Patentamt

European Patent Office

Office européen des brevets

(19)

(11) **EP 1 440 544 B1**

(12) **EUROPÄISCHE PATENTSCHRIFT**

(45) Veröffentlichungstag und Bekanntmachung des Hinweises auf die Patenterteilung:
**16.02.2005 Patentblatt 2005/07**

(51) Int Cl.⁷: **H04L 12/56**, H04L 12/64

(21) Anmeldenummer: **02802288.7**

(86) Internationale Anmeldenummer:
**PCT/EP2002/011017**

(22) Anmeldetag: **01.10.2002**

(87) Internationale Veröffentlichungsnummer:
**WO 2003/039082 (08.05.2003 Gazette 2003/19)**

(54) **VERFAHREN ZUR KOMMUNIKATION EINES REALZEIT-DATENVERKEHRS IN EINEM KOLLISIONSERKENNUNGS-BASIERTEN KOMMUNIKATIONSNETZ, ENTSPRECHENDES SPEICHERMEDIUM UND KOMMUNIKATIONSNETZ**

METHOD FOR COMMUNICATING REAL-TIME DATA TRAFFIC IN A COLLISION-RECOGNITION BASED COMMUNICATION NETWORK, CORRESPONDING STORAGE MEDIUM AND COMMUNICATION NETWORK

PROCEDE DE COMMUNICATION D'UN TRAFIC DE DONNEES TEMPS REEL DANS UN RESEAU DE COMMUNICATION BASE SUR LA DETECTION DE COLLISION, SUPPORT D'ENREGISTREMENT CORRESPONDANT ET RESEAU DE COMMUNICATION

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **31.10.2001 EP 01126052**

(43) Veröffentlichungstag der Anmeldung:
**28.07.2004 Patentblatt 2004/31**

(73) Patentinhaber: **SIEMENS AKTIENGESELLSCHAFT**
**80333 München (DE)**

(72) Erfinder: **LAUTHER, Ulrich**
**80686 München (DE)**

(56) Entgegenhaltungen:
**EP-A- 1 009 189       US-A- 6 101 188**
**US-A1- 2001 002 195**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Kommunikation eine Realzeit-Datenverkehrs in einem Kollisionserkennungsbasierten Kommunikationsnetz, zum Beispiel dem Realtime-Ethernet-Protokoll, bei dem deterministisch, zum Beispiel vorhersagbar, ein Realzeit-Datenverkehr über ein konventionelles Ethernet-Netzwerk erfolgt.

Ein solches System ist beispielsweise aus der internationalen Patentanmeldung WO 00/03521 bekannt, bei dem bei der Übertragung von Realzeitdaten durch eine entsprechende Middleware zwischen dem Anwendungsprogramm und dem Ethernet-Protokoll eine Datenkollision während der Realzeit-Übertragung verhindert. Nachteilig ist hierbei jedoch unter anderem, dass diese Middleware in jedem Netzwerkknoten vorhanden sein muss.

Aus der US-Patentanmeldung US 2001/0002195 A1 ist eine Lösung vorgeschlagen, bei der an der Peripherie des Netzwerks Device-Adapter platziert werden, denen bestimmte Zeitschlitze zugeordnet werden, innerhalb derer dieser dann exklusiv Datenpakete versenden kann. Dies führt jedoch zu einer geringen Nutzung der Ressourcen.

Die Aufgabe der Erfindung besteht nun darin, ein Verfahren zur Kommunikation eines Realzeit-Datenverkehrs in einem Kollisionserkennungs-basierten Kommunikationsnetz durch ein entsprechendes Speichermedium und ein Kommunikationsnetz anzugeben, bei dem jeweils die oben genannten Nachteile vermieden werden.

Diese Aufgabe wird hinsichtlich des Verfahrens durch die Merkmale des Patentanspruchs 1 und hinsichtlich des Kommunikationsnetzes durch die Merkmale des Patentanspruchs 7 erfindungsgemäß gelöst.

Die weiteren Ansprüche betreffen bevorzugte Ausgestaltungen des Verfahrens sowie ein maschinenlesbares Speichermedium.

Die Erfindung betrifft im Wesentlichen ein Verfahren für ein Kollisionserkennungs-basiertes Kommunikationsnetz, beispielsweise dem Ethernet, bei dem zeitlich vor einem zyklisch wiederkehrenden Realzeit-Datenverkehr ein Routing des Realzeit-Datenverkehrs auf die kostengünstigsten Datenpfade und anschließend ein Scheduling der Nachrichten des Realzeit-Datenverkehrs mit Hilfe einer gierigen Heuristik (greedy heuristic) erfolgen, um einen zyklisch wiederkehrenden Realzeit-Datenverkehr konfliktfrei und mit einer möglichst geringen Zykluszeit zu ermöglichen.

Die Erfindung wird nachfolgend anhand von in den Zeichnungen dargestellten Ausführungsbeispielen näher erläutert. Dabei zeigt

Figur 1     ein kleines Beispiel mit drei Nachrichten und vier Switches,

Figur 2     einen Bedingungsgraph, wenn eine Nachricht im Broadcastmode übertragen wird,

Figur 3     einen Bedingungsgraph, wenn eine Nachricht dupliziert wird,

Figur 4     ein Ganttdiagramm für den Fall von Figur 2,

Figur 5     ein Ganttdiagramm für den Fall von Figur 3,

Figur 6     einen Bedingungsgraph mit einer duplizierten Nachricht,

Figur 7     eine Lösung für den Fall von Figur 6 in Form eines Ganttdiagramms,

Figur 8     eine einfache Ringtopologie zur Erläuterung der Redundanzbehandlung,

Figur 9     ein Ganttdiagramm mit zwei unabhängig gerouteten Nachrichten für den Fall von Figur 8 und

Figur 10    zwei im Ressource disjoint mode geroutete Nachrichten für den Fall von Figur 8.

In einem Realzeit-Ethernet, das für schnelle Kommunikation zwischen Komponenten, wie beispielsweise Sensorenantriebe oder Controller, dient, werden innerhalb eines Systems planbare Nachrichten in einer zyklischen Art und Weise ausgetauscht. Für diese Nachrichten können sowohl die Pfade, die sie vom Sender zum Empfänger nehmen, als auch die Zeiten innerhalb eines Zyklusses, wenn sie die Schaltelemente (switches) des Netzes passieren, in einer Initialisierungs-bzw. Setupphase derart festgelegt werden, dass keine Konflikte zwischen diesen Nachrichten entstehen. Auf diese Weise wird die Kommunikation frei von jeglichem Non-determinismus und es wird auf diese Weise ein Realzeit-Verhalten möglich.

Zu diesem Zweck wird der Kommunikationszyklus in einen Realzeit-Teil, der diese geplanten Nachrichten enthält, und in einen Nicht-Realzeit-Teil aufgespalten, bei dem die ungeplanten Transaktionen unter Verwendung von Standard TCP/UDP/IP-Methoden stattfinden.

Der Realzeit-Teil sollte dabei im Gesamtzyklus möglichst geringen Raum einnehmen, um einen ausreichend großen Raum für ungeplante Transaktionen freizuhalten.

Das Netzwerk besteht aus Schalteinheiten (Switches) und bidirektionalen Verbindungen (Links). Jeder Link verbindet ein Paar von Switches oder genauer gesagt Ports von diesen zwei Switches. Die Links bewirken Verzögerungen, die proportional zur Länge der Links sind. Ferner werden feste Verzögerungszeiten für das Durchreichen einer Nachricht durch einen Switch angenommen; diese Verzögerung subsummiert so das Zulassen eines Synchronisationsjitters, was beim Scheduling nicht weiter Berücksichtigung findet.

Die Annahme einer festgelegten Verzögerung eines Switches impliziert, dass ein jeweiliger Switch keine Nachrichten zwischenspeichert, um sie dann später erst weiterzuleiten.

Die Topologie des Netzwerkes ist typischerweise ring- oder baumartig, ist jedoch nicht auf diese simplen Topologien beschränkt.

Ausgehend von einer Beschreibung der Netzwerkelemente und der Netzwerktopologie, der Nachrichten und ihrer Sender und Empfänger sowie globaler Designparameter wird für jede Nachricht ein Pfad durch das Netzwerk durch ein Routing bestimmt und die Zeitpunkte, wann die Nachrichten die jeweiligen Switches durchlaufen, festgelegt, wobei die Gesamtzeit aller zu sendenden Nachrichten dabei minimiert wird. Die Nebenbedingungen für die damit verbundene Routing und Schedulingaufgabe werden weiter unten noch näher erläutert. Im Prinzip sind Routing und Scheduling keine unabhängigen Aufgaben; die in der Routingphase durchgeführte Auswahl beeinflusst die Qualität des Scheduling. In einer einfacheren Variante der Erfindung wird das Routing und Scheduling jedoch als unabhängig voneinander betrachtet.

Das Routing-Problem

Als Eingangsgröße für das Routing dient eine Netzwerkbeschreibung und eine Liste von Nachrichten. Für jede Nachricht ist der sendende Switch und eine Menge von empfangenden Switches bekannt. Die Routingaufgabe besteht nun darin, einen Pfad, also eine Menge von Switches bzw. deren Ports, zu finden, um die Nachricht zum Bestimmungsort durchzureichen. Falls eine Nachricht k Bestimmungsorte aufweist, kann sie vom Sender gleichzeitig an alle Empfänger gesendet werden, wobei sie an zwischengeschalteten Switches verzweigt wird (Broadcast mode), oder aber sie kann unabhängig vom Sender zu k unterschiedlichen Zeitpunkten zu den k Empfängern gesendet werden. Darüber hinaus sind natürlich auch Varianten zwischen diesen beiden Extremen möglich. Weiter unten wird deutlich, dass die Auswahl zwischen diesen Optionen nicht trivial ist und innerhalb des Schedulings stattfinden kann. Als Ergebnis des Routings stehen dann für jede Nachricht die Links und Ports und die relativen Ankunftszeiten relativ zum Sendezeitpunkt fest, wobei die Ankunftszeiten in einfacher Weise auf Summierung der Verzögerungen durch die Links und Switches die eine Nachricht passiert berechnet werden können.

Das Scheduling Problem

Die Aufgabe des Schedulings ist die Zuweisung von absoluten Zeitpunkten für die gesendeten Nachrichten derart, dass keine Konflikte zwischen den Nachrichten auftreten und dass die Gesamtzykluszeit für die Übertragung aller Nachrichten (make span) minimiert wird. Durch die durch das Routing gegebenen Bedingungen werden automatisch auch die Ankunftszeiten an allen Ports, die von den Nachrichten genutzt werden, festgelegt.

Es treten jedoch potentiell Konflikte zwischen diesen Nachrichten auf, da die Ports ja zu einem bestimmten Zeitpunkt immer nur eine Nachricht durchschalten können.

Wird beispielsweise ein Portausgang p und zwei Nachrichten $m_i$ und mj, die diesen Port benutzen, betrachtet, so ergibt sich Folgendes:

Die zwei Nachrichten werden bei den entsprechenden Sendern zu den Zeitpunkten $t_i$ und $t_j$ gesendet und sind zu den Zeiten

$$t_{i,p} = t_i + \delta_{i,p}$$

und

$$t_{j,p} = t_j + \delta_{j,p}$$

an Portausgang p verfügbar, wobei $\delta_{i,p}$ die Summe der Verzögerungen zwischen dem Sender der Nachricht $m_i$ und dem Portausgang p darstellt. Unter der Voraussetzung, dass die beiden Nachrichten die Länge bzw. Dauer $l_i$ und $l_j$ aufweisen und zum einen der Fall auftreten kann, dass die Nachricht $m_i$ den Port p vor der Nachricht $m_j$ oder umgekehrt benutzen kann ergeben sich folgende Ungleichungen:

$$t_j \geq t_i + d_{i,j}$$

mit

$$d_{i,j} \;=\; \max_{p} \delta_{i,p} \;-\; \delta_{j,p} \;+\; l_i$$

und

$$t_j \leq t_i - d_{j,i}$$

mit

$$d_{j,i} \;=\; \max_{p} \delta_{j,p} \;-\; \delta_{i,p} \;+\; l_j .$$

Ressourcenkonflikte an Porteingängen brauchen dabei nicht berücksichtigt werden, wenn die Konflikte an den Portausgängen des Scheduling gelöst werden. Folgen solche zwei Nachrichten nicht unmittelbar aufeinander, so müssen die Lücken zwischen den beide Nachrichten natürlich während des Schedulings ebenfalls berücksichtigt werden.

Aufgabe des Schedulings ist also die Zuordnung jeder Nachricht zu einer oder mehreren Sendezeiten derart, dass alle Ungleichungen erfüllt und dabei die Gesamtzeit der Übertragung der Nachrichten minimiert wird.

<u>Zentrale Datenstruktur</u>

Für die programmtechnische Realisierung werden beispielsweise mit Vorteil folgende Datenstrukturen verwandt:

MessPort   beschreibt eine zu einem Port durchgereichte Nachricht und beinhaltet die relative Ankunftszeit der Nachricht an dem Port, einen Zeiger auf die Nachricht und einen Zeiger auf den Port.

Port   beschreibt einen Port und zeigt auf den zugehörigen Switch und den damit verbundenen Link. Darüber hinaus beinhaltet die Datenstruktur eine Liste von MessPorts, um einen Zugriff auf alle Nachrichten, die diesen Port benützen, bereitzustellen. Letztere Information ist das Ergebnis der Routingphase.

Switch   beschreibt einen Switch und beinhaltet den Namen des Switches sowie Zeiger auf seine Ports.

Link   beschreibt einen Link und beinhaltet die Länge bzw. die Verzögerung des Links sowie Zeiger zu den zwei Ports, die durch diesen Link miteinander verbunden sind.

Message   beschreibt eine Nachricht und beinhaltet den Nachrichtennamen, die Länge der Nachricht, einen Zeiger zu dem sendenden Switch, eine Liste mit den empfangenden Switches, eine Liste von MessPorts, die einen Zugriff auf alle von der Nachricht durchlaufenen Ports liefern und die dazugehörigen durch das Scheduling festgelegten Ankunftszeiten der Nachricht. Die Liste der MessPorts ist das Resultat der Routingphase und die Zeiten das Resultat der Schedulingphase.

Constraint   beschreibt eine Bedingung zwischen Schedulingzeiten von zwei Nachrichten, wie sie beispielsweise durch die oben angegebenen Ungleichungen gezeigt ist.

Component   beschreibt einen verbundenen Bestandteil eines Constraint-Graphen und beinhaltet eine Liste von allen Nachrichten und Ports, die zu dem jeweiligen Bestandteil gehören.

Das Routing

Für das Routing wird das Netzwerk durch einen Graphen modelliert. Hierfür gibt es ein Reihe von Möglichkeiten, es ist jedoch ausreichend, einen Switch als einen Knoten und einen Link als eine Kante eines Routinggraphen zu modellieren. Da alle Links bidirektional sind, kann beispielsweise ein ungerichteter Graph aus der TURBO-C++ Klassen-Bibliothek Verwendung finden. Für das Routing selbst kann der aus der Literatur hinlänglich bekannte Dijkstra-Algorithmus Verwendung finden, um für jede Nachricht, ausgehend vom die jeweilige Nachricht sendenden Switch, den kürzesten Pfadbaum zu bilden. Aus Effizienzgründen wird die vom Dijkstra-Algorithmus benötigte Prioritätsschlange für die mit Labels versehenen aber noch nicht behandelten Knoten als sogenannte Radix Queue implementiert. Der Baumerzeugungs-prozess wird dann gestoppt, wenn alle Zielknoten bzw. empfangenden Switches ein dauerhaftes Label haben. Durch einen zurückweisenden Zeiger kann auf einfache Weise der kürzeste Pfad vom Zielknoten zurück zum Wurzelknoten des Baums zurückverfolgt werden, wobei MessPort-Objekte erzeugt und zu der MessPort-Liste der entsprechenden Nachricht und des Ports hinzugefügt werden. Das wesentliche Resultat des Routings sind die MessPort-Objekte, die in den Port und Nachrichten-Objekten enthalten sind. Hierdurch wird ein einfacher Zugriff auf alle Nachrichten, die einen bestimmten Port durchlaufen und zu allen Ports, die von irgendeiner gegebenen Nachricht durchlaufen werden.

Scheduling

Die oben angegebenen Schedulingbedingungen können beispielsweise ebenfalls durch einen ungerichteten Graphen modelliert werden, wobei die Knoten des Graphen Nachrichten und die Kanten Bedingungen entsprechen, die bei der Zuweisung der Zeiten zu den beiden Nachrichten erfüllt sein müssen. Auf diese Weise entstehen aber eine große Anzahl von "parallelen" Bedingungen, von denen aber nur die stärksten dieser Bedingungen für das Scheduling relevant sind. Die Bedingungen können dabei entweder explizit in dem Graphen für die Bedingungen, beispielsweise in einer Matrix, gespeichert werden, um einen schnellen Zugriff für ein jeweiliges Knotenpaar zu erhalten, oder aber auch implizit repräsentiert sein und erst dann erzeugt werden, wenn Ports, die von einer bestimmten Nachricht benutzt werden, untersucht werden. Hierbei kann Verarbeitungszeit gespart werden, wenn es gelingt, das Schedulingproblem in kleinere Teilprobleme, die unabhängig voneinander gelöst werden können, aufzuspalten. Dies gelingt dann, wenn keine direkten oder indirekten Bedingungen zwischen Nachrichten bestehen.

Da das Schedulingproblem im allgemeinen unter Verwendung von effizienten Algorithmen nicht bis zur Optimalität gelöst werden kann, wird zur Bewertung der Heuristiken für das Scheduling eine untere Schranke ermittelt, um eine Abschätzung zur Entfernung vom Optimum zu haben. Diese untere Schranke kann beispielsweise auf der Basis von Nachrichten, die einen bestimmten Port benutzen, gebildet werden, wobei für jeden Port alle Nachrichtenlängen aufsummiert und daraus das Maximum gebildet wird und eine untere Schranke für die gesamte Zykluszeit (make span) darstellt. Für die Berechnung besserer unterer Schranken können auch maximale Teilmengen von Nachrichten, zwischen denen paarweise Bedingungen existieren, also maximale Gruppen (Cliquen) im Bedingungsgraphen, herangezogen werden.

Für das eigentliche Scheduling werden "gierige" Heuristiken (Greedy Heuristics) verwendet, wobei Nachrichten unter Verwendung eines Prioritätsschemas nach der kürzesten Durchführungszeit zugeteilt werden. Nachdem für eine Nachricht ein Scheduling erfolgt ist, wird die niedrigste Durchführungszeit für alle noch nicht durch das Scheduling geplanten Nachrichten und deren Prioritäten neu zugewiesen (Updating). Eine Möglichkeit der Implementierung besteht in einer Prioritätsschlange für die noch nicht geplanten (unscheduled) Nachrichten sowie einem Bedingungsgraphen für das Updating der niedrigsten Durchführungszeit und kann durch folgenden Pseudocode beschrieben werden:

```
queue_schedule() {

    forall messages m {
      lowest_feasible_time(m) = 0;
      put m into priority queue;
    }

    while (queue not empty) {
      select message m to schedule from priority queue;
      delete message m from priority queue;
      schedule m at lowest feasible time;
      for all affected messages h {
        update lowest time of h;
      update priority queue;
      }
    }

}
```

Ohne größere Einbußen kann jedoch auch anstelle der Prioritätsschlange nur eine Liste für die noch nicht eingeplanten Nachrichten verwendet werden, wodurch sich folgender Pseudocode für das Scheduling ergibt:

```
list_schedule() {

    forall messages m {
        lowest_feasible_time(m) = 0;
        put m into list of unscheduled messages;
    }

    while (list not empty) {
        select message m to schedule from unscheduled list;
        delete message m from unscheduled list;
        schedule m at lowest feasible time;
        for all affected messages h {
            update lowest time of h;
        }
    }
}
```

Eine einfachere und schnellere Variante des Schedulings berücksichtigt die Tatsache, dass oben jede Kante des Bedingungsgraphen eigentlich zweimal benutzt wird und kann durch folgenden Pseudocode angegeben werden:

```
fast_simple_schedule() {

    forall messages m {
        lowest_feasible_time(m) = 0;
        put m into list of unscheduled messages;
    }
```

```
while (list not empty) {
   select message m to schedule from unscheduled list;
   delete message m from unscheduled list;
   schedule m at lowest feasible time;
   for all ports p of message m {
      for all messages m1 of port p {
         update earliest feasible time;
         delete m1 from list of messages for port p;
      }
   }
}
rebuild lists of messages of ports;


}
```

Während des Updateschrittes werden die MessPort-Objekte von ihrer Liste im Port gestrichen, so dass kein Update mehr erfolgt für die Nachrichten, für die bereits ein Scheduling erfolgt ist. Auf diese Weise wird die Anzahl der MessPort-Objekte mit fortschreitendem Scheduling immer kleiner bis in einem letzten Schritt die Listen dann erneuert sind.

Natürlich wird, sogar auch mit einem noch so geistreichen Prioritätsschema, eine falsche Auswahl für die nächste durch das Scheduling einzuplanende Nachricht getroffen, da diese Auswahlen in einer "gierigen" Art und Weise mit begrenztem Wissen erfolgen. In einem Ausführungsbeispiel wird durch iterative Verbesserung versucht diese falschen Auswahlen zu beheben. Das grundlegende Schema hierfür ist durch folgenden Pseudocode beschrieben:

```
improvement () {
   while (solution can be improved) {
      select a message m and remove it from the schedule;
      find best position to reinsert m into the schedule;
      reinsert m into the schedule;

   }
}
```

Eine weitere Möglichkeit zur Verbesserung des Schedulings ist wesentlich schneller als die oben angegebene Verbesserung, da hier möglichst viele Verarbeitungsschritte inkrementell erfolgen. Zu diesem Zweck ist ein Konzept der längsten Pfade erforderlich. Nach dem Scheduling ist der ursprünglich ungerichtete Bedingungsgraph gerichtet; jede Kante wird dabei von der später geplanten Nachricht zur früher geplanten Nachricht gerichtet. Die Länge des längsten Pfades im Graphen, von irgendeinem Knoten bzw. einer Nachricht zu irgendeiner Senke des Graphen, ergibt die früheste Durchführungszeit für das Scheduling der jeweiligen Nachricht. Eine Zurückverfolgung der Kanten des Graphen und eine Berechnung des längsten Pfades ergeben die späteste Durchführungszeit, sofern die Gesamtzykluszeit nicht vergrößert wird. Fall die späteste Durchführungszeit größer als die früheste Durchführungszeit ist, weist die Nachricht einen sogenannten Schlupf (slack) auf. Eine Beseitigung dieser schlupfbehafteten Nachricht kann nicht zu einer Verringerung der gesamten Zykluszeit führen. Nur Nachrichten ohne einen solchen Schlupf bilden also einen kritischen Pfad im Bedingungsgraphen und sind Kandidaten für die Verbesserung. Durch Beseitigung einer solchen Nachricht in der Schedule wird ein zusätzlicher Schlupf für die anderen Nachrichten eingeführt und es gilt eine Position in der Liste der geplanten Nachrichten zu finden, wo dieser Schlupf am besten ausgenützt werden kann, zum Beispiel durch Einsetzen der beseitigten Nachricht mit minimaler Vergrößerung der Gesamtzykluszeit (make span). Dies kann dadurch erreicht werden, dass Nachrichten "unterhalb" und "oberhalb" der betrachteten Position untersucht werden. Diese Vorgehensweise wird durch den folgenden Pseudocode beschrieben:

```
improvement () {

    calculate forward and backward longest paths;


        while (solution can be improved) {

            select any message m in a cyclic fashion;

            if (m has slack) continue;

            remove m from schedule;
            note longest paths;
            update longest paths;

            find best position for messages m;

            if (best position gives improvement) {
              reinsert m at best position;
              update longest paths;
            }
            else {
            reinsert m at old position;
            restore longest paths;
            }

        }
    }
```

Das Auffinden der besten Position kann durch einen einfachen Durchlauf durch die Nachrichten in der Reihenfolge, wie sie durch da Scheduling geplant sind, erfolgen. Das Auffinden der besten Position kann beispielsweise durch den folgenden Pseudocode beschrieben werden:

```
find_best_position(Messages m) {
   for all ports p {
      initialize highest MessPort in p;
   }
   for all messages i as they have been scheduled {


   from highest MessPorts in ports of m determine earliest
   time for m
   from successor of highest MessPorts determine latest time
   for m;
   from earliest and latest time, determine increase of make
   span,
      when message m would be scheduled after message i;
   note position with least increase;
   increment highest MessPort for ports of i;
   }
}
```

Spezielle Beispiele

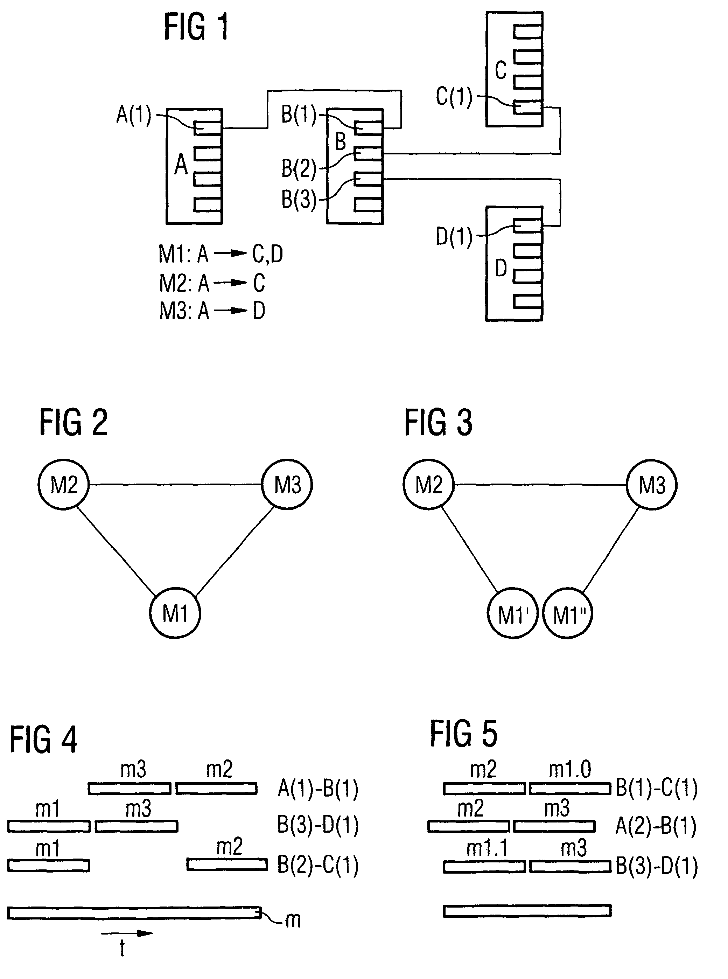

In Figur 1 wird die Handhabung von Nachrichten mit mehreren Bestimmungsorten anhand eines kleinen Beispiels mit drei Nachrichten M1, M2 und M3 und vier Schalteinrichtungen A...D demonstriert. Ein erster Port A(1) des Switches A ist dabei mit einem ersten Port B(1) des Switches B, ein zweiter Port B(2) dieses Switches mit einem ersten Port C(1) des Switches C und ein dritter Port B(3) des Switches B mit einem ersten Port D(1) des Switches D verbunden. Die Nachricht M1 soll dabei vom Switch B zu den Switches C und D, die Nachricht M2 vom Switch A zum Switch C und die Nachricht M3 vom Switch A zum Switch D übertragen werden.

Im Broadcastmode bestehen Bedingungen zwischen den Nachrichten M1 und M2, wobei beide den gemeinsamen Port von B benutzen, zwischen den Nachrichten M1 und M3, weil beide einen gemeinsamen Port von B aufweisen, und zwischen der Nachricht M2 und M3, weil beide einen gemeinsamen Port von Switch A aufweisen. Ein entsprechender Bedingungsgraph ist in Figur 2 dargestellt für den Fall, dass die Nachricht M1 im Broadcastmode übertragen wird.

Falls die Nachricht M1 in eine Nachricht M1' und in eine Nachricht M1" aufgespaltet wird, entstehen neue Bedingungen zwischen der Nachricht M1' und der Nachricht M2, weil sie einen gemeinsamen Port des Switches B aufweisen und zwischen der Nachricht M1" und der Nachricht M2, weil sie ebenfalls einen gemeinsamen Port von B aufweisen. Hier geht jedoch die Größe der maximalen Gruppe im Bedingungsgraphen von drei auf zwei herunter. In Figur 3 ist für diesen Fall, also wenn die Nachricht M1 dupliziert wird, dargestellt. Die Figuren 4 und 5 zeigen das jeweilige Ergebnis, wobei in Figur 4 die Lösung für die Nachricht M1 im Broadcastmode und in Figur 5 die Lösung mit der duplizierten Nachricht M1 gezeigt ist.

In den Figuren 4 und 5 sind in sogenannten Gantt-Diagrammen über eine horizontale Zeitachse in vertikaler Richtung die Ports aufgetragen und durch Rechtecke die Portbelegung durch die Nachrichten dargestellt, wobei diagonal durchgestrichene Nachrichten schlupfbehaftet sind. Das jeweilige große Rechteck unterhalb der Ports zeigt die jeweilige untere Zeit-Schranke für das Scheduling.

Nachrichten mit mehr als einer Bestimmung können also auf verschiedene Art behandelt werden. Durch Aufbrechen einer Nachricht in Teilnachrichten, die unabhängig behandelt werden, wird ein zusätzlicher Datenverkehr erzeugt, der aber gegebenenfalls die gesamte Zykluszeit erhöhen kann. Auf der anderen Seite, wenn die Nachricht baumartig geroutet wird, wenn sie also nur einmalig vom Ursprung aus gesendet wird, kann dies zu nur schwieriger zu erfüllenden Bedingungen führen. Um den besten Kompromiss zwischen einer Erzeugung von zu viel Datenverkehr bzw. zu sehr mit Bedingungen behafteten Problemen zu finden, muss das Routing und das Scheduling modifiziert werden. Beim Routing müssen die Nachrichten für mehrere Empfänger auf zwei unterschiedliche Art und Weisen behandelt werden.

Falls die Nachricht mit einem Flag "Broadcast" versehen ist, ist keine spezielle Aktion nötig, da es einfach ist, gemeinsame Teilpfade bei der Zurückverfolgung auszuschließen.

Falls der Broadcastmode für Multiempfängernachrichten nicht verlangt ist, kann die Nachricht auch mehrfach gesendet werden. Für diesen Fall wird, nach dem Routing der Nachricht, für jeden empfangenden Switch ein separates Message-Objekt generiert, wobei alle Nachrichten dieser Gruppe eine einzige gemeinsame Identifikation erhalten, so dass das Scheduling die Nachrichten dieser Gruppe weiterhin auf spezielle Weise behandeln kann. Falls nach dem Routing die MessPorts einer solchen teilweisen Nachricht $m_i$ eine Teilmenge der anderen Teilnachrichten mj in derselben Gruppe ist, dann wird die Zeilennachricht $m_i$ zusammen mit seinen MessPorts als redundant gestrichen. Das Auffinden dieser Teilbeziehungen ist einfach, wenn Nachrichten oder Teilnachrichten zuerst nach ihrer Gruppenidentifikation sortiert werden und deren Listen von MessPorts nach den Ports sortiert werden.

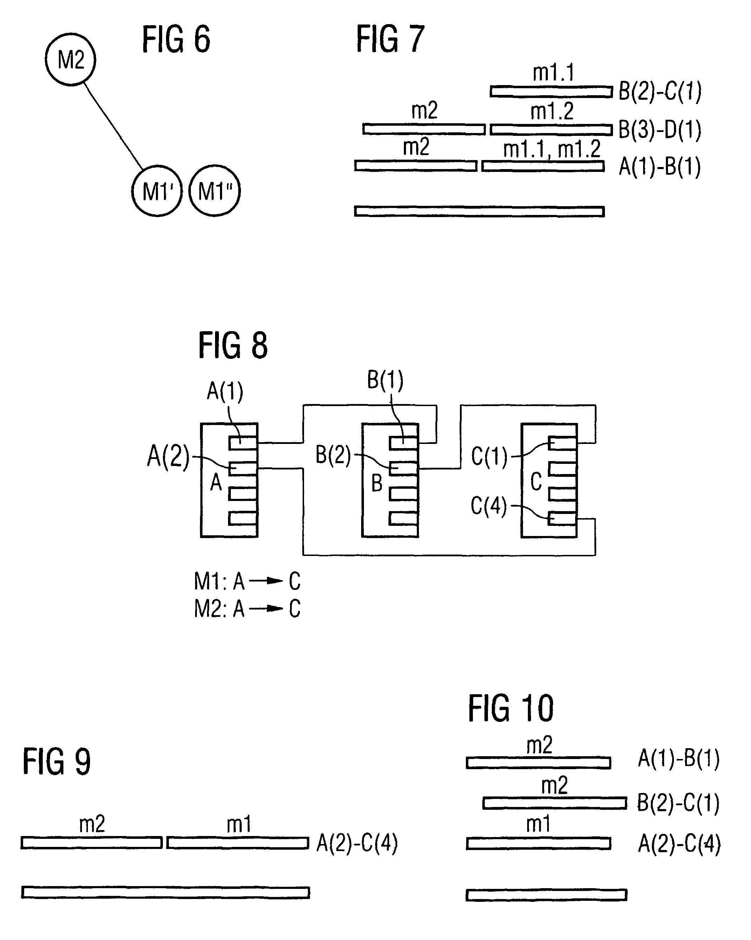

Die Verdopplung von Nachrichten erzeugt Schedulingprobleme mit weniger Bedingungen, führt aber zu zusätzlichem Datenverkehr, der teilweise in der Schedulingphase beseitigt werden kann. Die Nachrichtenverdopplung kann auch vor dem Routing erfolgen, was zu einer größeren Freiheit beim Routing führt. Eine Verdopplung erst nach dem Routing gewährleistet allerdings, dass alle Teilnachrichten einer Duplizierungsgruppe, die einen bestimmten gegebenen Port passieren, dieselbe relative Ankunftszeit an diesem Port aufweisen, was wiederum ein Wiederzusammenmenführen der Teilnachrichten in der Schedulingphase erleichtert. Während des Schedulings werden Teilnachrichten, die von derselben Nachricht stammen, in besonderer Weise behandelt. Diese Nachrichten erhalten die Erlaubnis, dass sie durch das Scheduling zu identischen Zeiten eingeplant werden. Deshalb müssen Bedingungen zwischen Teilnachrichten, die von einer einzigen Originalnachricht erzeugt werden, entsprechend berücksichtigt werden. Ein Paar solcher Nachrichten kann entweder unter Beachtung der normalen Bedingungen oder aber zu identischen Zeiten durch da Scheduling eingeplant werden. Ein Beispiel für diese Technik ist in Figur 6 dargestellt und zeigt die Bedingungen für das zuvor angegebene Beispiel, wenn die Nachricht M3 gestrichen ist. Aus dem entsprechenden Gantt-Diagramm von Figur 7 ist ersichtlich, dass die Nachrichten M1' und M1" nun zur selben Zeit eingeplant sind.

Während der iterativen Verbesserungsphase des Scheduling werden Folgen von benachbarten Unternachrichten, die von einer einzigen Originalnachricht stammen, gegenüber anderen Nachrichten bevorzugt behandelt. Diese benachbarten Unternachrichten werden dann wieder zusammengeführt, falls dies ohne Erhöhung der Gesamtzykluszeit möglich ist. Die Zusammenführung erfolgt durch Konkatenation der Listen von MessPorts, von den beiden Nachrichten unter Auslöschung der Duplikate in der resultierenden Liste und Löschung einer der beiden Nachrichten.

Die Behandlung einer Redundanz wird anhand einer in Figur 8 dargestellten einfachen Ringtopologie näher erläutert. Diese Ringtopologie besteht aus de Switches A, B und C, wobei der Port A(1) mit dem Port B(1), der Port B (2) mit dem Port C(1) und der Port A(2) mit dem Port C(4) verbunden sind und wobei Nachrichten M1 und M2 jeweils vom Switch A zum Switch C übertragen werden.

Während des Routings ist die Vorgehensweise wie folgt: Nachdem der erste Teil eines Redundanzpaares geroutet wurde, werden die Links, die von dieser Nachricht verwendet wurden, geblockt. Danach wird die zweite Nachricht dieses Paares geroutet und schließlich die Blockade aufgehoben. Auf diese Weise werden keine Switches außer dem Sender und Empfänger bzw. Ports von beiden Teilen des Paars benutzt. Im Falle einfacher Topologien, wie beispielsweise Ringen, ist dieser Ansatz ausreichend, weil keine wirkliche Auswahl im Routing besteht. Für komplexere Topologien jedoch dann eine Nachfrage nach zwei Ressourcen-getrennten Pfaden bestehen, die gemeinsam ein Kostenmaß minimieren. Dieses Problem kann exakt und effizient durch Behandlung als "MinCost-Flow Problem" gelöst werden. Das Scheduling ist nicht direkt durch ein fehlertolerantes Routing betroffen; es sind lediglich mehr Nachrichten im Scheduling einzuplanen. In Figur 9 ist ein Diagramm für den Fall, dass die Nachrichten M1 und M2 unabhängig geroutet werden, dargestellt. In Figur 10 zeigt ein entsprechendes Gantt-Diagramm die Situation für den Fall, dass die Nachrichten M1 und M2 im Modus mit getrennten Ressourcen übertragen werden.

**Patentansprüche**

1. Verfahren zur Kommunikation eines Realzeit-Datenverkehrs in einem kollisionserkennungsbasierten Kommunikationsnetz, bei dem zeitlich vor einem zyklisch wiederkehrenden Realzeit-Datenverkehr folgende Schritte durchgeführt werden:

   a) ein Routing des zyklisch wiederkehrenden Realzeit-Datenverkehrs auf die kostengünstigsten Datenpfade und

   b) ein Scheduling, bei dem ausgehend von den ermittelten kostengünstigsten Datenpfaden eine Festlegung

## EP 1 440 544 B1

von Sendezeitpunkten für die Nachrichten des zyklisch wiederkehrenden Realzeit-Datenverkehrs mit Hilfe einer gierigen Heuristik, wobei die Nachricht mit der frühest möglichen Ausführungszeit eine höchste Priorität erhält, für die jeweils noch nicht bestimmten Sendezeitpunkten zugeordneten Nachrichten die Ausführungszeiten neu berechnet werden und diese beiden Schritte solange wiederholt werden bis alle Nachrichten in einer Prioritätsliste geordnet sind und eine zeitliche Nachrichtenbelegung der Schaltstellen-Ports des Kommunikationsnetzes sowie die zugehörige Zyklusdauer feststehen.

**2.** Verfahren nach Anspruch 2,
bei dem nach Ablauf der gierigen Heuristik Austauschschritte in der Prioritätsliste erfolgen, wobei eine jeweilige schlupffreie Nachricht entfernt wird und der bei den anderen Nachrichten dadurch entstehende Schlupf für die jeweilige entfernte schlupffreie Nachricht genutzt wird.

**3.** Verfahren nach einem der Ansprüche 2 oder 3,
bei dem die kostengünstigsten Datenpfade durch Auswahl der kürzesten Verbindung ermittelt werden.

**4.** Verfahren nach einem der Ansprüche 2 oder 3,
bei dem das Routing und Scheduling wiederholt durchgeführt werden, wobei durch das Scheduling jeweils die Kostenfaktoren für das Routing verändert werden.

**5.** Verfahren nach einem der vorhergehenden Ansprüche,
bei dem das Ergebnis mindestens eines Routings und Schedulings in einem Gantt-Diagramm dargestellt wird, wobei das Gantt-Diagramm die zeitliche Nachrichtenbelegung der Schaltstellen-Ports des Kommunikationsnetzes zeigt.

**6.** Maschinenlesbares Speichermedium mit darauf gespeicherten Befehlen, die einen Rechner zur Durchführung eines der Verfahren nach Anspruch 1 bis 5 veranlassen.

**7.** Kollisionserkennungsbasiertes Kommunikationsnetz zur Kommunikation eines Realzeit-Datenverkehrs,
bei dem eine Einheit vorhanden ist, die zeitlich vor einem zyklisch wiederkehrenden Realzeit-Datenverkehr folgende Schritte veranlasst:

a) ein Routing des zyklisch wiederkehrenden Realzeit-Datenverkehrs auf die kostengünstigsten Datenpfade und
b) ein Scheduling, bei dem ausgehend von den ermittelten kostengünstigsten Datenpfaden eine Festlegung von Sendezeitpunkten für die Nachrichten des zyklisch wiederkehrenden Realzeit-Datenverkehrs mit Hilfe einer gierigen Heuristik, wobei die Nachricht mit der frühest möglichen Ausführungszeit eine höchste Priorität erhält, für die jeweils noch nicht bestimmten Sendezeitpunkten zugeordneten Nachrichten die Ausführungszeiten neu berechnet werden und diese beiden Schritte solange wiederholt werden bis alle Nachrichten in einer Prioritätsliste geordnet sind und eine zeitliche Nachrichtenbelegung der Schaltstellen-Ports des Kommunikationsnetzes sowie die zugehörige Zyklusdauer feststehen.

## Claims

**1.** Method for communication of real-time data exchange in a collision detection-based communication network, in which the following steps are performed chronologically before a cyclic repeating real-time data exchange: a) a routing of the cyclic repeating real-time data traffic to the most economical data paths and b) a scheduling, in which, starting from the most economical data paths determined, send points are determined for the messages of the cyclic repeating real-time data exchange with the aid of a greedy heuristic, with the message with the earliest possible execution time being given the highest priority, new execution times being calculated for the messages assigned to send points not yet determined and these two steps being repeated until all messages are arranged in a priority list and a chronological message occupancy of the switching ports of the communication network as well as the associated cycle duration is established.

**2.** Method in accordance with Claim 2,
in which, after execution of the greedy heuristic, there are exchange steps in the priority list, where a slack-free message is removed in each case and the slack that this causes in the other messages is used for the removed slack-free message in each case.

12

**3.** Method in accordance with one of the Claims 2 or 3,
in which the most economical data paths are determined by selecting the shortest connections.

**4.** Method in accordance with one of the Claims 2 or 3,
in which the routing and scheduling are run repeatedly, with the scheduling changing the cost factors for the routing in each case.

**5.** Method in accordance with one of the previous claims,
in which the result of at least one routing and scheduling is displayed in a Gantt diagram, with the Gantt diagram showing the message occupancy of the switch ports of the communication network.

**6.** Machine-readable memory medium with commands stored on it which cause a computer to execute one of the methods in accordance with Claim 1 to 5.

**7.** Collision detection-based communication network for communication of real-time data exchange in which a unit is present which causes the following steps to be executed chronologically before a cyclic repeating data exchange:

a) a routing of the cyclic repeating real-time data exchange on the most economical data paths and
b) a scheduling, in which, starting from the most economical data paths determined, send points are determined for the messages of the cyclic repeating real-time data exchange with the aid of a greedy heuristic, with the message with the earliest possible execution time being given the highest priority, new execution times being calculated for the messages assigned to send points not yet determined and these two steps being repeated until all messages are arranged in a priority list and a chronological message occupancy of the switching ports of the communication network as well as the associated cycle duration is established

**Revendications**

**1.** Procédé de communication d'un trafic de données en temps réel dans un réseau de communication basé sur la détection de collision, dans lequel sont exécutées, temporellement avant un trafic de données en temps réel à répétition cyclique, les étapes suivantes:

a) un routage du trafic de données en temps réel à répétition cyclique sur les chemins de données dont le coût est le plus avantageux et
b) un ordonnancement dans lequel, partant des chemins de données déterminés dont le coût est le plus avantageux, une détermination d'instants d'émission pour les messages du trafic de données en temps réel à répétition cyclique a lieu à l'aide d'une heuristique gloutonne, le message avec le temps d'exécution le plus tôt possible recevant une priorité la plus élevée, les temps d'exécution étant recalculés pour les messages respectivement non encore affectés à des instants d'émission déterminés, et ces deux étapes sont répétées jusqu'à ce que tous les messages soient ordonnés dans une liste de priorité et une occupation temporelle des ports de points de commutation du réseau de communication par des messages ainsi que la durée de cycle associée soient déterminées.

**2.** Procédé selon la revendication 1,
dans lequel des étapes d'échange ont lieu dans la liste de priorité après le déroulement de l'heuristique gloutonne, un message respectif exempt de marge étant éliminé et la marge qui se forme de ce fait dans le cas des autres messages étant utilisée pour le message respectif éliminé, exempt de marge.

**3.** Procédé selon l'une des revendications 2 ou 3,
dans lequel les chemins de données dont le coût est le plus avantageux sont déterminés par sélection de la liaison la plus courte.

**4.** Procédé selon l'une des revendications 2 ou 3,
dans lequel le routage et l'ordonnancement sont effectués de manière répétée, les facteurs de coût pour le routage étant respectivement modifiés par l'ordonnancement.

**5.** Procédé selon l'une des revendications précédentes,
dans lequel le résultat d'au moins un routage et un ordonnancement est représenté dans un diagramme de Gantt, le diagramme de Gantt montrant l'occupation temporelle des ports de points de commutation du réseau de communication par des messages.

6.  Moyen d'enregistrement lisible par machine, comportant des instructions enregistrées dessus, lesquelles incitent un ordinateur à l'exécution de l'un des procédés selon la revendication 1 à 5.

7.  Réseau de communication basé sur la détection de collision pour la communication d'un trafic de données en temps réel,
dans lequel une unité est présente, laquelle fait exécuter, temporellement avant un trafic de données en temps réel à répétition cyclique, les étapes suivantes:

    a) un routage du trafic de données en temps réel à répétition cyclique sur les chemins de données dont le coût est le plus avantageux et
    b) un ordonnancement dans lequel, partant des chemins de données déterminés dont le coût est le plus avantageux, une détermination d'instants d'émission pour les messages du trafic de données en temps réel à répétition cyclique a lieu à l'aide d'une heuristique gloutonne, le message avec le temps d'exécution le plus tôt possible recevant une priorité la plus élevée, les temps d'exécution étant recalculés pour les messages respectivement non encore affectés à des instants d'émission déterminés, et ces deux étapes sont répétées jusqu'à ce que tous les messages soient ordonnés dans une liste de priorité et une occupation temporelle des ports de points de commutation du réseau de communication par des messages ainsi que la durée de cycle associée soient déterminées.

## FIG 1

M1: A → C,D
M2: A → C
M3: A → D

## FIG 2

## FIG 3

## FIG 4

## FIG 5

FIG 6

M2

M1'  M1"

FIG 7

m1.1
B(2)-C(1)

m2    m1.2
B(3)-D(1)

m2    m1.1, m1.2
A(1)-B(1)

FIG 8

A(1)

B(1)

A(2)

A

B(2)

B

C(1)

C

C(4)

M1: A ⟶ C
M2: A ⟶ C

FIG 10

m2
A(1)-B(1)

m2
B(2)-C(1)

m1
A(2)-C(4)

FIG 9

m2    m1
A(2)-C(4)